(19) Europäisches Patentamt / European Patent Office / Office européen des brevets

(11) **EP 2 134 651 B1**

(12) **EUROPEAN PATENT SPECIFICATION**

(45) Date of publication and mention
of the grant of the patent:
**14.02.2018 Bulletin 2018/07**

(21) Application number: **08732580.9**

(22) Date of filing: **20.03.2008**

(51) Int Cl.:
*C01F 7/00* (2006.01)        *B01J 23/00* (2006.01)
*C10G 11/04* (2006.01)        *B01J 35/00* (2006.01)
*B01J 21/16* (2006.01)        *B01J 23/06* (2006.01)
*B01J 23/10* (2006.01)        *B01D 53/50* (2006.01)
*B01D 53/86* (2006.01)        *B01J 23/78* (2006.01)
*B01D 53/96* (2006.01)        *B01J 29/08* (2006.01)
*B01J 37/00* (2006.01)        *C09C 1/42* (2006.01)
*C10G 11/18* (2006.01)

(86) International application number:
**PCT/US2008/057675**

(87) International publication number:
**WO 2008/116076 (25.09.2008 Gazette 2008/39)**

(54) **ADDITIVE-CONTAINING ANIONIC CLAYS FOR REDUCING SOX EMISSIONS FROM AN FCC REGENERATOR AND PROCESS FOR MAKING THEM**

ADDITIVHALTIGE ANIONISCHE TONE ZUR VERRINGERUNG VON SOX-EMISSIONEN AUS EINEM FCC-REGENERATOR UND HERSTELLUNGSVERFAHREN DAFÜR

ARGILES ANIONIQUES CONTENANT UN ADDITIF POUR RÉDUIRE LES ÉMISSIONS D'OXYDES DE SOUFRE PROVENANT D'UN RÉGÉNÉRATEUR FCC ET PROCÉDÉ PERMETTANT DE PRODUIRE DE TELLES ARGILES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.03.2007 US 919067 P**

(43) Date of publication of application:
**23.12.2009 Bulletin 2009/52**

(73) Proprietor: **Albemarle Netherlands BV
3818 LH Amersfoort (NL)**

(72) Inventors:
• **DE GRAAF, Elbert, Jan
1066 AP Amsterdam (NL)**
• **GONZALEZ, Jorge, Alberto
Houston, TX 77059 (US)**
• **FRANCIS, Julie, Ann
Houston, TX 77062 (US)**
• **LUDVIG, Maria, Margaret
Seabrook, TX 77586 (US)**

(74) Representative: **Schwabe - Sandmair - Marx
Patentanwälte Rechtsanwalt
Partnerschaft mbB
Joseph-Wild-Straße 20
81829 München (DE)**

(56) References cited:
WO-A-01/12570        WO-A-02/068329
WO-A-2005/040311        WO-A-2008/003091

## Description

Hydrocarbons may be converted catalytically in a process (fluid catalytic cracking) wherein the hydrocarbons are brought into contact with fluidized catalyst particles under appropriate conditions in a reaction zone. In this process, the catalyst particles are gradually deactivated when coke byproduct is formed and precipitates on the catalyst particles. The (partially) deactivated catalyst particles are removed from the reaction zone, freed from volatile components in a stripping zone, subsequently passed to a regeneration zone and, following their regeneration by combustion of the coke with an oxygen-containing gas, fed back to the reaction zone.

The combustion of the coke in the regeneration zone results in the formation of sulfur oxides from sulfur that originates from sulfur-containing compounds in the hydrocarbon feed and is present in the coke. The emission of the sulfur oxides contained in the flue gases from the regenerator is undesirable from a point of view of environmental protection and may be controlled by adding a suitable sulfur oxides absorbent which may be regenerated thermally or chemically and may form part of the catalyst composition.

Metal oxides, in the form of SOx transfer catalysts and/or additives, have been used to reduce sulfur oxides emissions. The metal oxides react in the regeneration zone with the sulfur oxides to form non-volatile inorganic sulfur compounds. In the reaction zone and in the stripping zone these sulfur compounds are subsequently converted under the influence of hydrocarbons and steam to convert the inorganic sulfur compounds to a hydrogen sulphide-containing gas and to recover the metal oxides. These metal oxides have also been utilized in conjunction with anionic clays.

Anionic clays have a crystal structure consisting of positively charged layers of specific combinations of divalent and trivalent metal hydroxides between which there are anions and water molecules. Hydrotalcite is an example of a naturally occurring anionic clay wherein Mg is the divalent metal, Al is the trivalent metal, and carbonate is the predominant anion present. Meixnerite is an anionic clay wherein Mg is the divalent metal, Al is the trivalent metal, and hydroxyl is the predominant anion present.

Anionic clays are further subdivided according to the identity of the atoms that make up their crystalline structures. For example, anionic clays in the pyroaurite-sjogrenite-hydrotalcite group are based upon brucite-like layers (wherein magnesium cations are octahedrally surrounded by hydroxyl groups), which alternate with interstitial layers of water molecules and/or various anions (e.g., carbonate ions). When some of the magnesium in a brucite-like layer is isomorphously replaced by a higher charged cation, e.g., $Al^{3+}$, then the resulting $Mg^{2+}$--$Al^{3+}$--OH layer gains in positive charge. Hence, an appropriate number of interstitial anions, such as those noted above, are needed to render the overall compound electrically neutral.

Natural minerals that exhibit such crystalline structures include, but by no means are limited to, pyroaurite, sjogrenite, hydrotalcite, stichtite, reevesite, eardleyite, mannaseite, barbertonite and hydrocalumite.

Anionic clays are also often referred to as "mixed metal hydroxides" or "layered double hydroxides." This expression derives from the fact that, as noted above, positively charged metal hydroxide sheets of anionic clays may contain two metal cations in different oxidation states (e.g., $Mg^{2+}$ and $Al^{3+}$). Moreover, because the XRD patterns for so many anionic clays are similar to that of hydrotalcite, $Mg_6Al_2(OH)_{16}(CO_3)\cdot4H_2O$, anionic clays also are also commonly referred to as "hydrotalcite-like compounds."

For the purposes of this specification (unless otherwise stated), use of the term "hydrotalcite-like" compound(s) and "anionic clays" shall be considered interchangeable with the understanding that these terms should be taken to include anionic clays, hydrotalcite itself as well as any member of that class of materials generally known as "hydrotalcite-like compounds."

The preparation of anionic clays has been described in many prior art publications. Two major reviews of anionic clay chemistry were published in which the synthesis methods available for anionic clay synthesis have been summarized: F. Cavani et al "Hydrotalcite-type anionic clays: Preparation, Properties and Applications," Catalysis Today", 11 (1991) Elsevier Science Publishers B. V. Amsterdam; and J P Besse and others "Anionic clays: trends in pillary chemistry, its synthesis and microporous solids"(1992), 2, 108, editors: M. I. Occelli, H. E. Robson, Van Nostrand Reinhold, N.Y.

In these reviews, the authors state that a characteristic of Mg--Al anionic clays is that mild calcination at 500 °C results in the formation of a disordered MgO-like product. The disordered MgO-like product is distinguishable from spinel (which results upon severe calcination) and from anionic clays. In this specification we refer to disordered MgO-like materials as Mg--Al solid solutions. Furthermore, these Mg--Al solid solutions contain a well-known memory effect whereby the exposure to water of such calcined materials results in the reformation of the anionic clay structure.

Two types of anionic clay preparation are described in these reviews. The most conventional method is co-precipitation (in Besse this method is called the salt-base method) of a soluble divalent metal salt and a soluble trivalent metal salt, optionally followed by hydrothermal treatment or aging to increase the crystallite size. The second method is the salt-oxide method in which a divalent metal oxide is reacted at atmospheric pressure with a soluble trivalent metal salt, followed by aging under atmospheric pressure. This method has only been described for the use of ZnO and CuO in combination with soluble trivalent metal salts.

For work on anionic clays, reference is further made to the following articles: Chemistry Letters (Japan), 843 (1973) Clays and Clay Minerals, 23, 369 (1975) Clays and Clay Minerals, 28, 50 (1980) Clays and Clay Minerals, 34, 507 (1996) Materials Chemistry and Physics, 14, 569 (1986). In addition there is an extensive amount of patent literature on the use of anionic clays and processes for their preparation.

Several patent applications relating to the production of anionic clays from inexpensive raw materials have been published. These materials include magnesium oxide and aluminum trihydrate.

WO 99/41198 relates to the production of anionic clay from two types of aluminum compounds and a magnesium source. One of the aluminum sources is aluminum trihydrate or a thermally treated form thereof.

WO 99/41196 discloses the preparation of anionic clays with acetate as the charge balancing anion from magnesium acetate, another magnesium source and aluminum trihydrate.

In WO 99/41195 a continuous process is described for the production of a Mg--Al anionic clay from a Mg source and aluminum trihydrate.

WO 99/41197 discloses the production of an anionic clay-containing composition comprising a Mg--Al anionic clay and unreacted aluminum trihydrate or a thermally treated form thereof.

Several patents describe the synthesis of hydrotalcites, i.e. anionic clays, out of magnesium oxide and a transition alumina in a batch-wise manner and under non-hydrothermal conditions: U.S. Pat. Nos. 5,728,364, 5,728,365, 5,728,366, 5,730,951, 5,776,424, 5,578,286. Comparative Examples 1 to 3 presented in these patents indicate that upon using aluminum trihydrate as aluminum source anionic clays are not formed.

When anionic clays are used in SOx abatement chemistry, additives are often employed within the anionic clay. In general, these additives are deposited on the anionic clay by impregnation, or, as described in US 7,022,304, the anionic clay is doped with the additive.

The generally accepted mechanism for SOx transfer catalysts and/or additives is as follows: (1) the oxidation of $SO_2$ to $SO_3$; (2) the chemisorption of $SO_3$ on the catalyst and/or additive as a metal sulfate; and (3) the reduction of sulfates to $H_2S$. Steps 1 and 2 occur in the FCC regenerator at approximately 520 °C - 530 °C under reducing conditions. Because each of the steps occurs in series, any one of the three steps can limit SOx transfer additive performance.

The first step in the mechanism of SOx transfer additives is the oxidation of $SO_2$. Under FCC regenerator conditions, $SO_2$ is favored over $SO_3$. Thus, SOx transfer catalysts and/or additives contain catalytic ingredients that promote the oxidation of $SO_2$. Desirable metal oxides for the chemisorption of $SO_3$ are those that possess a large adsorption capacity of $SO_3$ to form moderately stable metal sulfates, for example, the magnesium alumina spinel. Furthermore, a SOx transfer catalyst and/or additive must include vanadium, typically in the form of a vanadium oxide, to facilitate the reduction of metal sulfates and sulfides to $H_2S$ in the FCC riser (Davey, Stephen W., Environmental Fluid Catalytic Cracking, Petroleum Technology Quarterly, presented at the European Refining Technology Conference, Feb 2000).

However, due to more strict government regulations, vanadium-containing materials have come under enhanced scrutiny because of its detrimental effects on the environment. Thus, a need exists for vanadium free materials that exhibit good SOx reduction performance in the FCC regenerator.

## BRIEF DESCRIPTION OF THE DRAWING

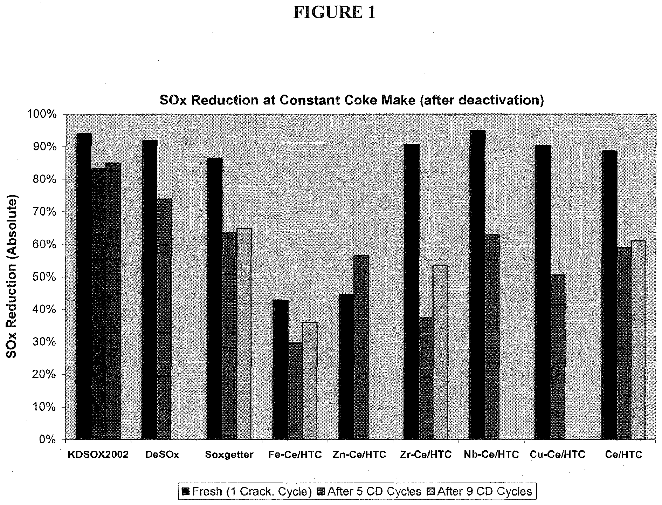

Figure 1: SOx Additive Testing Results are shown in Figure 1.

## DESCRIPTION OF THE INVENTION

This objective is achieved by the process according to the present invention. Generally, the process comprises the steps of: a) milling a physical mixture of a magnesium compound and an aluminum compound, b) calcining the physical mixture at a temperature in the range of about 200 to about 800°C, and c) rehydrating the calcined mixture in aqueous suspension to form an additive-containing anionic clay, wherein an additive is present in the physical mixture and/or the aqueous suspension of step c).

In this specification, the tem "milling" is defined as any method that results in reduction of particle size. Such a particle size reduction can at the same time result in the formation of reactive surfaces and/or heating of the particles. Instruments that can be used for milling include ball mills, high-shear mixers, colloid mixers, and electrical transducers that can introduce ultrasound waves into a slurry. Low-shear mixing, i.e. stirring that is performed essentially to keep the ingredients in suspension, is not regarded as "milling".

The physical mixture can be milled as dry powder or in suspension. It will be clear that, when the physical mixture is in suspension, at least one of the metal compounds present in the mixture (the divalent metal compound, the trivalent metal compound, or both) must be water-insoluble.

Suitable water-insoluble magnesium compounds include magnesium oxides or hydroxides such as MgO, $Mg(OH)_2$, magnesium carbonate, magnesium hydroxy carbonate, magnesium bicarbonate, hydromagnesite and magnesium-containing clays such as dolomite, saponite, and sepiolite. Suitable water-soluble magnesium compounds are magnesium acetate, magnesium formate, magnesium (hydroxy) acetate, magnesium nitrate, and magnesium chloride.

Preferred magnesium compounds are oxides, hydroxides, carbonates, hydroxycarbonates, bicarbonates, and (hydroxy)acetates, as these materials are relatively inexpensive. Moreover, these materials do not leave undesirable anions in the additive-containing anionic clay which either have to be washed out or will be emitted as environmentally harmful gases upon heating.

Suitable water-insoluble aluminium compounds include aluminium oxides and hydroxides such as transition alumina, aluminium trihydrate (bauxite ore concentrate, gibbsite, bayerite) and its thermally treated forms (including flash-calcined aluminium trihydrate), sols, amorphous alumina, and (pseudo)boehmite, aluminium-containing clays such as kaolin, sepiolite, bentonite, and modified clays such as metakaolin. Suitable water-soluble aluminium salts are aluminium nitrate, aluminium chloride, aluminium chlorohydrate, and sodium aluminate.

One embodiment of the present invention employs the use of alumina trihydrate (such as gibbsite, bayerite or nordstrandite) or thermally treated forms thereof. Another embodiment employs the use of boehmite or pseudoboehmite. The reaction results in the direct formation of an anionic clay that can be obtained by simply drying the slurry retrieved from the reactor. There is no need for washing or filtering, and a wide range of ratios of divalent metal/trivalent metal in the reaction product is possible.

Aluminum trihydrate includes crystalline aluminum trihydrate (ATH). Also BOC (Bauxite Ore Concentrate), bayerite and nordstrandite are suitable aluminum trihydrates. BOC is the cheapest alumina source. The alumina trihydrate is preferred to have a particle size ranging from 1 to 150 $\mu$m, more preferably smaller than 20 $\mu$m.

Thermally treated forms of aluminum trihydrate may be employed in processes of the invention. Calcined aluminum trihydrate is readily obtained by thermally treating aluminum trihydrate (gibbsite) at a temperature above 100°C., preferably ranging from 100 to 800°C., for a period of 15 minutes to 24 hours. In any event, the calcination temperature and time for obtaining calcined aluminum trihydrate should be sufficient to cause a measurable increase of the surface area compared to the surface area of the gibbsite as produced by the Bayer process which is generally between 30 and 50 m$^2$/g. It should be noted that within the context of this invention, flash calcined alumina is also considered to be a thermally treated form of aluminum trihydrate, although generally it is considered a very specific alumina. Flash calcined alumina is obtained by treating aluminum trihydrate at temperatures between 800 to 1000°C for very short periods of time in special industrial equipment, as is described in U.S. Pat. Nos. 4,051,072 and 3,222,129. Combinations of aluminum trihydrate and thermally treated forms of aluminum trihydrate can also be used, as well as combinations of various thermally treated forms of aluminum trihydrate can also be used.

When used, the aluminum trihydrate or its thermally treated form is preferably added to the reactor in the form of a slurry. In particular, it is emphasized that there is no need to use a peptisable alumina source (gibbsite is not peptisable) and as a result no need to add either mineral or organic acid to vary the pH of the mixture. In the process according to the invention, other aluminum sources beside aluminum trihydrate or its thermally treated forms may be added to the aqueous suspension such as oxides and hydroxides of aluminum (e.g. sols, gels, pseudo-boehmite, micro-crystalline boehmite), aluminum salts such as aluminum nitrate, aluminum chloride, aluminum chlorohydrate and sodium aluminate. The other aluminum sources may be soluble or insoluble in water and may be added to the aluminum trihydrate and/or its thermally treated form or may be added to the aqueous suspension separately as a solid, a solution, or a suspension.

Another embodiment of the present invention employs the use of boehmite and/or pseudoboehmite. Preparation of boehmite and pseudoboehmite is typically, but not limited to, a synthesis route wherein soluble aluminum salts are precipitated under controlled pH conditions to form pseudoboehmite which can then be further thermally treated to obtain various amounts of crystalline boehmite with a surface area generally ranging from about 200 to about 350 m$^2$/g (BET as measured by nitrogen adsorption). The prepared material may be used in an aqueous slurry form either alone, or in combination with ATH.

Preferred aluminum compounds are oxides, hydroxides, carbonates, bicarbonates, hydroxycarbonates, and (hydroxy)acetates, as these materials are relatively inexpensive. Moreover, these materials do not leave undesirable anions in the additive-containing anionic clay which either have to be washed out or will be emitted as environmentally harmful gases upon heating.

The magnesium and/or aluminum metal compounds may be doped, thus preparing a doped anionic clay.

Doped metal compounds can be prepared in several ways. In general, the metal compound and a dopant are converted to a dopant-containing metal compound in a homogeneously dispersed state.

Suitable dopants are compounds containing elements selected from the group of alkaline earth metals (for instance Ca and Ba), alkaline metals, transition metals (for example Mn, Fe, Co, Ti, Zr, Cu, Ni, Zn, Mo, W, V, Sn), actinides, rare earth metals such as La, Ce, Nd, noble metals such as Pt and Pd, silicon, gallium, boron, titanium, and phosphorus.

The dopants may be employed as nitrates, sulfates, chlorides, formates, acetates, oxalates, alkoxides, carbonates, and tungstates. The use of compounds with heat-decomposable anions is preferred, because the resulting doped metal compounds can be dried directly, without intermittent washing, as anions undesirable for catalytic purposes are not present.

As stated above, the first step in the process of the invention involves milling of a physical mixture of the magnesium and the aluminum compound. This physical mixture can be prepared in various ways. The magnesium and aluminum compound can be mixed as dry powders (either doped or exchanged) or in (aqueous) suspension thereby forming a slurry, a sol, or a gel. In the latter case, the magnesium and aluminum compound are added to the suspension as powders, sols, or gels and the preparation and milling of the mixture is followed by drying.

If the physical mixture is prepared in aqueous suspension, dispersing agents can be added to the suspension. Suitable dispersing agents include surfactants, phosphates, sugars, starches, polymers, gelling agents, swellable clays, etc. Acids or bases may also be added to the suspension.

The molar ratio of magnesium to aluminum metal in the physical mixture preferably ranges from about 0.01 to about 10, more preferably about 0.1 to about 5, and most preferably about 1 to about 3. The physical mixture is milled, either as dry powder or in suspension. In addition to milling of the physical mixture, the magnesium compound and the aluminum compound may be milled individually before forming the physical mixture.

When the physical mixture is milled in suspension, the mixture is wet milled for about 1 to about 30 minutes at room temperature, for instance in a ball mill, a bead mill, a sand mill, a colloid mill, a high shear mixer, a kneader, or by using ultrasound. After wet milling and before calcination, the physical mixture must be dried, for example spray-drying may be employed.

In addition to drying the physical mixture, in order to optimize binding characteristics, the physical mixture may be aged from about 15 minutes to about 6 hours at a temperature in the range of about 20 to about 110°C, more preferably from about 20 to about 90°C, even more preferably from about 30 to about 90°C, and at ambient pressure.

The preferred average size of the particles obtained after milling is about 0.1 to about 10 microns, more preferably about 0.5 to about 5 microns, most preferably about 1 to about 3 microns. The temperature during milling may be ambient or higher. Higher temperatures may for instance result naturally from the milling process or may be generated by external heating sources. Preferably, the temperature during milling ranges from about 20 to about 90°C, more preferably from about 30 to about 50°C.

The physical mixture is calcined at a temperature in the range of about 200 to about 800°C, more preferably in the range of about 300 to about 700°C, and most preferably in the range from about 350 to about 600°C. Calcination is conducted for about 0.25 to about 25 hours, preferably for about 1 to about 8 hours, and most preferably for about 2 to about 6 hours. All commercial types of calciners can be used, such as fixed bed or rotating calciners.

Calcination can be performed in various atmospheres, e.g, in air, oxygen, inert atmosphere (e.g. N2), steam, or mixtures thereof.

The so-obtained calcined material must contain rehydratable oxide. The amount of rehydratable oxide formed depends on the type of magnesium and aluminum compound

used and the calcination temperature. Preferably, the calcined material contains about 10 to 100% of rehydratable oxide, more preferably about 30 to 100%, even more preferably about 50 to 100%, and most preferably about 70 to 100% of rehydratable oxide. The amount of rehydratable oxide formed in step b) is equivalent to and calculated from the amount of anionic clay obtained in step c). This amount can be determined by mixing various known amounts of pure anionic clay with samples of the rehydrated product of step c). Extrapolation of the relative intensities of anionic clay to non-anionic clay in these mixed samples - as measured with Powder X-Ray Diffraction (PXRD) - can then be used to determine the amount of anionic clay in the rehydrated product. An example of an oxide that is not rehydratable is a spinel-type oxide.

Rehydration of the calcined material is conducted by contacting the calcined mixture with a water or an aqueous solution of anions. This can be done by passing the calcined mixture over a filter bed with sufficient liquid spray, or by suspending the calcined mixture in the liquid. The temperature of the liquid during rehydration is preferably between about 25 and about 350°C, more preferably between about 25 and about 200°C, most preferably between about 50 and about 150°C, the temperature of choice depending on the nature of the divalent and trivalent metal compound used. Rehydration is performed for about 20 minutes to about 24 hours, preferably about 30 minutes to about 8 hours, more preferably about 1 to about 4 hours.

During rehydration, the suspension can be milled by using high-shear mixers, colloid mixers, ball mills, kneaders, ultrasound, etc. Rehydration can be performed batch-wise or continuously, optionally in a continuous multi-step operation according to prepublished United States patent application no. 2003-0003035. For example, the rehydration suspension is prepared in a feed preparation vessel, whereafter the suspension is continuously pumped through two or more conversion vessels. Additives, acids, or bases, if so desired, can be added to the suspension in any of the conversion vessels. Each of the vessels can be adjusted to its own desirable temperature.

During rehydration, anions can be added to the liquid. Examples of suitable anions include inorganic anions like $NO_3^-$, $NO_2^-$, $CO_3^{2-}$, $HCO_3^-$, $SO_4^{2-}$, $SO_3NH_2$, $SCN^-$, $S_2O_6^{2-}$, $SeO_4^-$, $F^-$, $Cl^-$, $Br^-$, $I^-$, $ClO_3^-$, $ClO_4^-$, $BrO_3^-$, and $IO_3^-$, silicate, aluminate, and metasilicate, organic anions like acetate, oxalate, formate, long chain carboxylates (e.g. sebacate, caprate and caprylate (CPL)), alkylsufates (e.g. dodecylsulfate (DS) and dodecylbenzenesulfate), stearate, benzoate, phthalocyanine tetrasulfonate, and polymeric anions such as polystyrene sulfonate, polyimides, vinylbenzoates, and vinyldiacrylates, and pH-dependent boron-containing anions, bismuth-containing anions, thallium-containing anions, phosphorus-containing anions, silicon-containing anions, chromium-containing anions, tungsten-containing anions, molybdenum-containing anions, iron-containing anions, niobium-containing anions, tantalum-containing anions, manganese-containing anions, aluminium-containing anions, and gallium-containing anions.

In one embodiment of the present invention, a soluble $SO_4^{2-}$ anionic material is employed to achieve an improved particle integrity resulting in improved physical properties of the final product. The anionic material may be added on top of, or as part of the anionic salt being used. It is preferred that the anion remain in a soluble form during rehydration.

The additive to be used in the process according to the present invention is a compound comprising an element selected from the group consisting of Fe, Zn, and combinations thereof. The additive is preferably an oxide, hydroxide, carbonate, or hydroxycarbonate of the desired element. One or more additive(s) may be present in the physical mixture and/or to the aqueous suspension of step c).

If present in the physical mixture, the additive may be added to the physical mixture before or during milling step a), during calcination step b), or between milling step a) and calcination step b). Addition during calcination requires the use of a calciner with sufficient mixing capability that can be effectively used as mixer as well as calciner. The additive can be added to the physical mixture in step a) and the suspension of step c) as a solid powder, in suspension or, preferably, in solution. If added during calcination, it is added in the form of a powder.

The resulting additive-containing anionic clay can be subjected to additional calcination and optionally additional rehydration steps. If calcination is followed by a subsequent rehydration, an additive-containing anionic clay is formed analogous to the one formed after the first rehydration step, but with an increased mechanical strength. These second calcinations and rehydration steps may be conducted under conditions which are either the same or different from the first calcination and rehydration steps. Additional additives may be added during the additional calcination step(s) and/or during the rehydration step(s). These additional additives can be the same or different from the additive present in the physical mixture and/or the aqueous suspension of step c).

Furthermore, during the additional rehydration step(s), anions can be added. Suitable anions are the ones mentioned above in relation to the first rehydration step. The anions added during the first and the additional rehydration step can be the same or different.

If so desired, the additive-containing anionic clay prepared according to the process of the present invention can be mixed with conventional catalyst or sorbent ingredients such as silica, alumina, aluminosilicates, zirconia, titania, boria, (modified) clays such as kaolin, acid leached kaolin, dealuminated kaolin, smectites, and bentonite, (modified or doped) aluminium phosphates, zeolites (e.g. zeolite X, Y, REY, USY, RE-USY, or ZSM-5, zeolite beta, silicalites), phosphates (e.g. meta or pyro phosphates), pore regulating agents (e.g. sugars, surfactants, polymers), binders, fillers, and combinations thereof. The additive-containing anionic clay, optionally mixed with one or more of the above conventional catalyst components, can be shaped to form shaped bodies. Suitable shaping methods include spray-drying, pelletising, extrusion (optionally combined with kneading), beading, or any other conventional shaping method used in the catalyst and absorbent fields or combinations thereof.

## EXAMPLES

Example 1:

SOx Additive Preparation

A 4:1 molar mixture of magnesia and alumina was slurried in water at 15% solids and milled to 3 microns. The milled slurry was subsequently aged at 50 °C for 2 hrs and a solution of cerium nitrate was added. The viscous slurry was then spraydried. The spraydried material was calcined at 550 °C for 2 hrs and then reslurried in water at 30% solids at 50 °C for 30 minutes. Various additives, such as iron and zinc, were added as soluble salts during rehydration.

Cyclic Deactivation of Additives

A commercial spent (coked) catalyst (henceforth referred to as spent catalyst) was obtained from a commercial FCC unit. This coked catalyst contained 0.91 wt% carbon, 470 ppm sulfur, and 220 ppm nitrogen. An FCC catalyst was pre-steamed at 788 °C for 20 hours in a fixed-fluidized bed reactor under 100% steam before being used in the cyclic deactivation study. A Kuwait vacuum gas oil was used in the cyclic deactivation process. This feedstock has a sulfur content of 3.1 wt%, total nitrogen concentration of 1027 ppm, and basic nitrogen concentration of 301 ppm.

The detailed Cyclic Deactivation (CD) method has been described in the following references: (1) Efthimiadis, E. A., Iliopoulou, E. F., Lappas, A. A., Iatridis, D. K., and Vasalos I. A. Ind. Eng. Chem. Res. 41(22), 5401 - 5409, (2002); and (2) Dishman, K. L., Doolin, P. K., and Tullock, L. D., Ind. Eng. Chem. Res., 37, 4631-4636, (1998). Deactivation of the exemplary SOx reduction additives was conducted by CD of a blend of additive and a pre-steamed FCC catalyst (PST FCC Base) using the Kuwait VGO. No additional metal was added to the feed. The additive level in the blend was 5 wt%. The deactivation went through cracking, stripping, regeneration cycles and finished after a catalyst regeneration step. This last regeneration step removes deposited coke on the deactivated additive/catalyst blend, negating any impact on the test itself from the deactivation process. The number of CD cycles can be adjusted to reflect different deactivation severities. During the regeneration cycles, the partial pressure of steam applied was low in order to better simulate the commercial FCCU operation.

After deactivation, 10 grams of the additive/FCC catalyst blend was mixed with 49.5 grams of spent catalyst, to keep the overall additive amount 0.5 g. Variation of additive levels can be obtained by changing the amount of the additive/FCC catalyst blend being mixed with the spent catalyst.

SOx Additive Testing

Additives were evaluated in an Advanced Additive Testing Unit (AATU) during the simulated regeneration of a coked catalyst. The reaction unit has a gas feeding system, a fixed-fluidized bed reactor and a gas analysis system. A multi-gas, FTIR-based analyzer (MKS 2030) was chosen as the primary gas analyzer. The gases that can be measured include $CO_x$, $SO_x$, $NO_x$ (NO, $N_2O$, $NO_2$) and HCN as well as some hydrocarbons typically observed during coke combustion. $O_2$ analysis is conducted using a paramagnetic oxygen analyzer (Oxygen Analyzer Model 100P, California Analytical Instruments). The reactor can handle sample sizes in the 10-200 g range allowing evaluation of emission control additives at a wide range of concentrations.

$SO_2$ reduction was calculated according to the difference in the total gases released with or without additives (Base Case) as follows:

$$SO_2 \; reduction = 1 - \frac{Total \; SO_{2(AdditiveBlends)}}{Total \; SO_{2(BaseCase)}}$$

SOx Additive Evaluation Results

The results of the SOx Additive testing are shown in Figure 1. The bar graph above shows that vanadium free SOx additives prepared in accordance with the processes of the invention show good performance, even after 5 CD cycles and 9 CD cycles of deactivation. KDSOx 2002, DeSOx and Soxgetter are commercially available SOx additives (KDSOx2002 is made with a 4:1 MgO/Al2O3 ratio HTC material with 11% CeO2 and 3% V2O5; Soxgetter is another HTC based material with about the same amount of CeO2 and V2O5; DeSOx is a spinel based material containing similar amounts of cerium and vanadium). Vanadium free additives have the advantage of featuring an enhanced release function compared to their vanadium containing counterparts. This effect can be seen in the TGA testing results shown in the table below. TGA testing employed a Perkin Elmer Pyris 1 with an autosampler. 20 mg samples were subjected to the following protocol: 1) the sample was heated to 680 °C at 20 °C/min and then heated to 725 °C at 10 °C/min under a flow of nitrogen, 80cc/min; 2) temperature held at 725 °C for 5 minutes; 3) samples were exposed to a SO2 gas mix (0.5% SO2, 2% O2 balance N2) for 14 minutes; 4) sample were cooled under N2, to 575 °C; 5) temperature was held at 575 °C for 5 min and then samples were exposed to H2 flow (5% H2 in N2) for 10 minutes; 6) samples were heated to 725 °C, under N2, at 20 °C/min; 7) repeat steps 2 through 6; 8) repeat steps 2 through 5. Wt% changes during SO2 pick-up and H2 release cycles were determined using software for the TGA. Fe, Cu (not according to the invention) and Zn-Ce/HTC show equivalent SOx pickup compared to vanadium containing materials, but with enhanced release.

TGA Results (% wt change)

| Additive | Total Uptake | Total Release |
|---|---|---|
| Fe-Ce/HTC | 28.2 | 24.6 |
| Cu-Ce/HTC | 24.8 | 20.0 |
| Zn-Ce/HTC | 25.4 | 15.4 |
| KDSOx 2002 | 28.4 | 10.1 |
| Ce/HTC | 27.0 | 6.0 |

Example 2:

Physical Property Comparison

Ce/HTC containing 11 wt% cerium was prepared as described in Example 1. The attrition index of the product made in accordance with the invention wherein no anionic material was present during rehydration was determined to be 7.0. A similar Ce/HTC (11 wt% cerium) prepared in accordance with the invention that included an anionic material during the rehydration step (20g of $H_2SO_4$ per liter of rehydration volume) exhibited an attrition index of 1.0. The attrition index measured in this example is defined as one quarter of the percentage of fines generated in three hours from the catalyst tested in an attrition apparatus described in ASTM Standard Test Method D-5757 and run under similar conditions described in that method.

**Claims**

1.　A process for the preparation of an additive-containing anionic clay comprising the steps of:

　　a. milling a physical mixture of a magnesium compound and an aluminum compound,
　　b. calcining the milled physical mixture at a temperature in the range of 200 to 800°C, and
　　c. rehydrating the calcined mixture in aqueous suspension to form the additive-containing anionic clay, wherein an additive, which is a compound comprising an element selected from the group consisting of iron, zinc and combinations thereof, is present in the aqueous suspension of step (c), and the additive-containing anionic clay is free of vanadium; wherein cerium is present in the physical mixture.

2. The process of claim 1 wherein the calcination temperature ranges from 300 to 700°C, preferably from 350 to 600 °C.

3. The process of claim 1 further comprising the step of aging the physical mixture of step a).

4. The process of claim 3 wherein the aging ranges from 15 min to 6 hours at a temperature ranging from 20 to 110 °C.

5. The process of claim 1 wherein the additive is an oxide, hydroxide, carbonate, or hydroxycarbonate.

6. The process of claim 1 further comprising the step of a subsequent calcination of the formed additive-containing anionic clay.

7. The process of claim 6 further comprising the step of rehydrating the subsequently calcined additive-containing anionic clay.

8. The process of claim 1 wherein an anionic material is present during step (c).

9. The process of claim 8 wherein the anionic material supplies anions selected from the group consisting of inorganic anions, organic anions, and polymeric anions.

10. The process of claim 9 wherein the supplied anion is $SO_4^{2-}$.

11. The process of claim 1 wherein the magnesium compound and/or the aluminum compound is a dopant-containing metal compound,
wherein the dopant is preferably a compound containing elements selected from the group consisting of alkaline earth metals, alkaline metals, transition metals, actinides, rare earth metals, noble metals, silicon, gallium, boron, titanium, and phosphorus, in particular preferably
wherein the dopant is a compound containing elements selected from the group consisting of iron, zinc, zirconium, niobium, silver, manganese, copper, chromium, rhodium, and combinations thereof.

12. The process of claim 11, wherein the dopant is optionally a nitrate, sulfate, chloride, formate, acetates, oxalate, alkoxide, carbonate, or tungstate.

13. The process of claim 1 further comprising the step of aging the physical mixture of step a), wherein the aging ranges from 15 min to 6 hours at a temperature ranging from 20 to 90 °C.

14. An anionic clay obtainable by a process according to any one of claims 1 to 13.

15. A method for reducing SOx emissions from an FCC regenerator, the method comprising the step of adding to the FCC regenerator an anionic clay according to claim 14.

**Patentansprüche**

1. Verfahren zur Herstellung eines additivhaltigen anionischen Tons, umfassend die Schritte von:

   a. Mahlen eines physikalischen Gemisches von einer Magnesiumverbindung und einer Aluminiumverbindung,
   b. Kalzinieren des gemahlenen physikalischen Gemisches bei einer Temperatur im Bereich von 200 bis 800°C, und
   c. Rehydratisieren des kalzinierten Gemisches in wässriger Suspension, um den additivhaltigen anionischen Ton zu bilden,

   wobei ein Additiv in der wässrigen Suspension von Schritt (c) vorhanden ist, welches eine Verbindung ist, die ein Element umfasst, das aus der Gruppe ausgewählt ist, welche aus Eisen, Zink und Kombinationen davon besteht, und der additivhaltige anionische Ton frei von Vanadium ist; wobei Cer in dem physikalischen Gemisch vorhanden ist.

2. Verfahren nach Anspruch 1, wobei die Kalzinierungstemperatur in einem Bereich von 300 bis 700°C, bevorzugt von 350 bis 600°C liegt.

3. Verfahren nach Anspruch 1, ferner umfassend den Schritt von Altern des physikalischen Gemisches von Schritt a).

4. Verfahren nach Anspruch 3, wobei das Altern in einem Bereich von 15 min bis 6 Stunden bei einer Temperatur in einem Bereich von 20 bis 110°C liegt.

5. Verfahren nach Anspruch 1, wobei das Additiv ein Oxid, Hydroxid, Carbonat oder Hydroxycarbonat ist.

6. Verfahren nach Anspruch 1, ferner umfassend den Schritt einer anschließenden Kalzinierung des gebildeten additivhaltigen anionischen Tons.

**7.** Verfahren nach Anspruch 6, ferner umfassend den Schritt von Rehydratisieren des anschließend kalzinierten additivhaltigen anionischen Tons.

**8.** Verfahren nach Anspruch 1, wobei ein anionisches Material während Schritt (c) vorhanden ist.

**9.** Verfahren nach Anspruch 8, wobei das anionische Material Anionen bereitstellt, welche aus der Gruppe ausgewählt sind, die aus anorganischen Anionen, organischen Anionen und polymeren Anionen besteht.

**10.** Verfahren nach Anspruch 9, wobei das bereitgestellte Anion $SO_4^{2-}$ ist.

**11.** Verfahren nach Anspruch 1, wobei die Magnesiumverbindung und/oder die Aluminiumverbindung eine dotiermittelhaltige Metallverbindung ist, wobei das Dotiermittel bevorzugt eine Verbindung ist, die Elemente enthält, welche aus der Gruppe ausgewählt sind, die aus Erdalkalimetallen, Alkalimetallen, Übergangsmetallen, Aktiniden, Seltenerdmetallen, Edelmetallen, Silicium, Gallium, Bor, Titan und Phosphor besteht, wobei insbesondere bevorzugt das Dotiermittel eine Verbindung ist, die Elemente enthält, welche aus der Gruppe ausgewählt sind, die aus Eisen, Zink, Zirconium, Niobium, Silber, Mangan, Kupfer, Chrom, Rhodium und Kombinationen davon besteht.

**12.** Verfahren nach Anspruch 11, wobei das Dotiermittel gegebenenfalls ein Nitrat, Sulfat, Chlorid, Formiat, Acetate, Oxalat, Alkoxid, Carbonat oder Wolframat ist.

**13.** Verfahren nach Anspruch 1, ferner umfassend den Schritt von Altern des physikalischen Gemisches von Schritt a), wobei das Altern in einem Bereich von 15 min bis 6 Stunden bei einer Temperatur in einem Bereich von 20 bis 90°C liegt.

**14.** Anionischer Ton, erhältlich durch ein Verfahren gemäß einem der Ansprüche 1 bis 13.

**15.** Verfahren zum Reduzieren von $SO_x$-Emissionen von einem FCC-Regenerator, wobei das Verfahren den Schritt von Geben eines anionischen Tons gemäß Anspruch 14 zu dem FCC-Regenerator umfasst.

**Revendications**

**1.** Procédé de préparation d'une argile anionique contenant un additif comprenant les étapes de :

a. broyage d'un mélange physique d'un composé de magnésium et d'un composé d'aluminium,
b. calcination du mélange physique broyé à une température comprise entre 200 et 800 °C, et
c. réhydratation du mélange calciné en suspension aqueuse pour former l'argile anionique contenant un additif,

dans lequel un additif, qui est un composé comportant un élément choisi parmi le fer, le zinc et les combinaisons de ceux-ci, est présent dans la suspension aqueuse de l'étape (c), et l'argile anionique contenant un additif est dépourvu de vanadium ; dans lequel du cérium est présent dans le mélange physique.

**2.** Procédé selon la revendication 1, dans lequel la température de calcination est compris entre 300 et 700 °C, de préférence entre 350 et 600 °C.

**3.** Procédé selon la revendication 1, comprenant en outre l'étape de vieillissement du mélange physique de l'étape a).

**4.** Procédé selon la revendication 3, dans lequel le vieillissement est compris entre 15 min et 6 heures à une température compris entre 20 et 110 °C.

**5.** Procédé selon la revendication 1, dans lequel l'additif est un oxyde, un hydroxyde, un carbonate ou un hydroxycarbonate.

**6.** Procédé selon la revendication 1, comprenant en outre l'étape de calcination subséquente de l'argile anionique contenant un additif formée.

**7.** Procédé selon la revendication 6, comprenant en outre l'étape de réhydratation de l'argile anionique contenant un additif ensuite calcinée.

**8.** Procédé selon la revendication 1, dans lequel un matériau anionique est présent au cours de l'étape (c).

**9.** Procédé selon la revendication 8, dans lequel le matériau anionique fournit des anions choisis parmi les anions inorganiques, les anions organiques et les anions polymères.

**10.** Procédé selon la revendication 9, dans lequel l'anion fourni est le $SO_4^{2-}$.

**11.** Procédé selon la revendication 1, dans lequel le composé de magnésium et/ou le composé d'aluminium est un composé métallique contenant un dopant,
dans lequel le dopant est de préférence un composé contenant des éléments choisis parmi les métaux alcalino-terreux, les métaux alcalins, les métaux de transition, les actinides, les terres rares, les métaux nobles, le silicium, le gallium, le bore, le titane et le phosphore, de manière particulièrement préférée dans lequel le dopant est un composé contenant des éléments choisis parmi le fer, le zinc, le zirconium, le niobium, l'argent, le manganèse, le cuivre, le chrome, le rhodium, et les combinaisons de ceux-ci.

12. Procédé selon la revendication 11, dans lequel le dopant est facultativement un nitrate, un sulfate, un chlorure, un formate, des acétates, un oxalate, un alkoxyde, un carbonate ou un tungstate.

13. Procédé selon la revendication 1, comprenant en outre l'étape de vieillissement du mélange physique de l'étape a), dans lequel le vieillissement est compris entre 15 min et 6 heures à une température comprise entre 20 et 90 °C.

14. Argile anionique pouvant être obtenue par un procédé selon l'une quelconque des revendications 1 à 13.

15. Procédé de réduction des émissions d'oxydes de soufre provenant d'un régénérateur FCC, le procédé comprenant l'étape d'ajout au régénérateur FCC d'une argile anionique selon la revendication 14.

# FIGURE 1

**SOx Reduction at Constant Coke Make (after deactivation)**

■ Fresh (1 Crack. Cycle)  ■ After 5 CD Cycles  ▨ After 9 CD Cycles

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9941198 A
- WO 9941196 A
- WO 9941195 A
- WO 9941197 A
- US 5728364 A
- US 5728365 A
- US 5728366 A
- US 5730951 A
- US 5776424 A
- US 5578286 A
- US 7022304 B
- US 4051072 A
- US 3222129 A
- US 20030003035 A

**Non-patent literature cited in the description**

- Hydrotalcite-type anionic clays: Preparation, Properties and Applications. **F. CAVANI et al.** Catalysis Today. Elsevier Science Publishers B. V, 1991, 11
- **J P BESSE.** Anionic clays: trends in pillary chemistry, its synthesis and microporous solids. Van Nostrand Reinhold, 1992, vol. 2, 108
- *Chemistry Letters,* 1973, 843
- *Clays and Clay Minerals,* 1975, vol. 23, 369
- *Clays and Clay Minerals,* 1980, vol. 28, 50
- *Clays and Clay Minerals,* 1996, vol. 34, 507
- *Materials Chemistry and Physics,* 1986, vol. 14, 569
- **DAVEY, STEPHEN W.** Environmental Fluid Catalytic Cracking. Petroleum Technology Quarterly, February 2000
- **EFTHIMIADIS, E. A. ; ILIOPOULOU, E. F. ; LAPPAS, A. A. ; IATRIDIS, D. K. ; VASALOS I. A.** *Ind. Eng. Chem. Res.,* 2002, vol. 41 (22), 5401-5409
- **DISHMAN, K. L. ; DOOLIN, P. K. ; TULLOCK, L. D.** *Ind. Eng. Chem. Res.,* 1998, vol. 37, 4631-4636